# FASCICULE DE BREVET EUROPEEN

(11) **EP 1 464 851 B1**
(45) Date de publication et mention de la délivrance du brevet: **21.06.2006**
(21) Numéro de dépôt: 04290637.0
(22) Date de dépôt: 09.03.2004
(51) Int. Cl.: F16B 21/02

(54) **Dispositif de fixation, notamment de maintien d'un empilement d'au moins deux panneaux**
Befestigungsvorrichtung, insbesondere zum Festhalten eines Stapels von mindestens zwei Platten
Fastening means, specially for holding a stack of at least wo panels

(30) Priorité: 03.04.2003 FR 0304155
(43) Date de publication de la demande: 06.10.2004
(73) Titulaire: Lisi Automotive Rapid, 95650 Puiseux Pontoise (FR)
(72) Inventeur: Perol, Rodolphe Dominique Gilles, 75015 Paris (FR); Marcel, Gilles Jean Michel, 95620 Parmain (FR); Leon, Jean-Pierre René, 78800 Houilles (FR)
(74) Mandataire: Thinat, Michel

(56) Documents cités:
- WO-A-00/49299
- GB-A- 576 458
- US-B1- 6 227 782

## Description

L'invention concerne un dispositif de fixation, notamment de maintien d'un empilement d'au moins deux panneaux, du type comprenant une pièce femelle en forme d'une agrafe constituée d'une tête élastiquement déformable dans la direction axiale et d'un pied creux susceptible de s'engager dans des perçages traversant ledit empilement de panneaux et comportant deux pattes susceptibles de s'écarter élastiquement l'une de l'autre en étant mobiles entre une position non écartée d'insertion du pied dans lesdits perçages et une position écartée de maintien de l'empilement des panneaux, et une pièce mâle comportant une partie formant tête et une partie formant fût à section transversale en forme d'une came insérable axialement dans ladite agrafe, avec engagement entre les pattes du pied de l'agrafe et rotative dans celle-ci entre une position angulaire d'un non écartement des pattes et une position angulaire d'écartement des pattes, ainsi que des moyens d'empêchement d'une rotation intempestive de la pièce mâle dans la pièce femelle dans la position d'écartement des pattes.

Un dispositif de fixation de ce type est connu par le brevet français N° 2 790 046. Dans ce dispositif, les moyens anti-rotation comportent des bosses sur la surface supérieure de la tête de l'agrafe qui sont susceptibles de s'engager chacune dans la périphérie de la tête de la pièce mâle lorsque celle-ci se trouve dans sa position d'écartement des pattes du pied de l'agrafe. Ces moyens présentent l'inconvénient qu'ils n'assurent plus un blocage angulaire de la pièce mâle dans la pièce femelle lorsque l'empilement des panneaux est soumis à des vibrations.

La présente invention a pour but de pallier l'inconvénient qui vient d'être décrit du dispositif de fixation connu.

Pour atteindre ce but, le dispositif de fixation selon l'invention est caractérisé en ce que l'organe précité est réalisé sous forme d'un doigt déplaçable par une action volontaire entre une position d'engagement dans une encoche à la périphérie de la tête de la pièce mâle et une position de dégagement de cette encoche, lorsque les pièces mâle et femelle occupent leur position angulaire relative d'écartement des pattes dans la tête de la pièce mâle.

Selon une caractéristique de l'invention, le doigt est disposé à l'extrémité d'un élément en saillie, élastiquement déformable dans la direction axiale du dispositif.

Selon une autre caractéristique de l'invention, la tête de la pièce femelle est évidée et l'organe élastiquement déformable fait saillie dans l'évidement de la tête à partir des bords de la tête.

Selon encore une autre caractéristique de l'invention, le doigt est déplaçable par une force agissant sur le doigt, dans la direction axiale du dispositif.

Selon encore une autre caractéristique de l'invention, la tête de la pièce femelle présente le profil d'un C dont les bords repliés sont sensiblement parallèles à la paroi de base et délimitent avec cette dernière un espace de réception d'un élément de blocage axial de la pièce mâle dans la pièce femelle lorsque la pièce mâle est enfoncée dans la pièce femelle et se trouve dans ses positions angulairement décalées de sa position d'écartement des pattes, l'élément de blocage étant solidaire de la tête de la pièce mâle.

Selon encore une autre caractéristique de l'invention, l'élément de blocage axial assure un blocage de la pièce mâle dans la pièce femelle dans la position enfoncée de non écartement des pattes, permettant un retrait de l'ensemble formé par les deux pièces des perçages des panneaux.

Selon encore une autre caractéristique de l'invention, l'élément de blocage comporte à sa périphérie des portions (50) en saillie dans la direction radiale du dispositif, qui, dans la position d'enfoncement axial de la pièce mâle dans la pièce femelle, passent à travers l'évidement de la tête de la pièce femelle et viennent en prise derrière des portions de délimitation de l'évidement dans la tête dans les positions angulairement décalées de la position d'enfoncement et d'écartement des pattes.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue en perspective d'un dispositif de fixation selon l'invention, à l'état éclaté, avant l'insertion dans un empilement de panneaux ;
- la figure 2 est une vue en perspective du dispositif de fixation selon la figure 1, à l'état pré-assemblé ;
- la figure 3 est une vue en élévation du dispositif selon la figure 2;
- la figure 4 est une vue en direction de la flèche IV de la figure 3 ;
- la figure 5 est une vue de dessus du dispositif selon la figure 3 ;
- la figure 6 est une vue en coupe le long de la ligne VI-VI de la figure 4 ; et
- la figure 7 est une vue en élévation, à plus grande échelle, montrant le dispositif dans sa position de blocage d'un empilement de plaques.

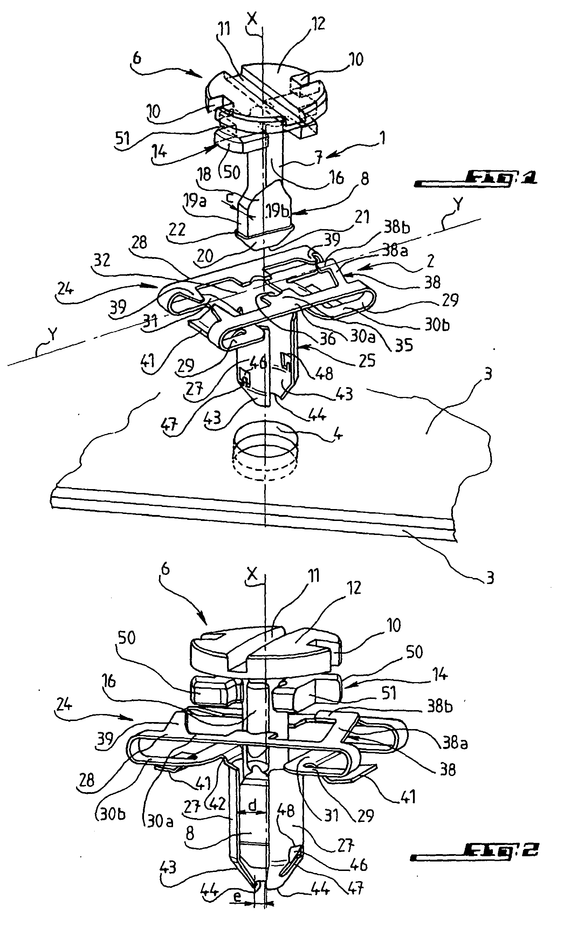

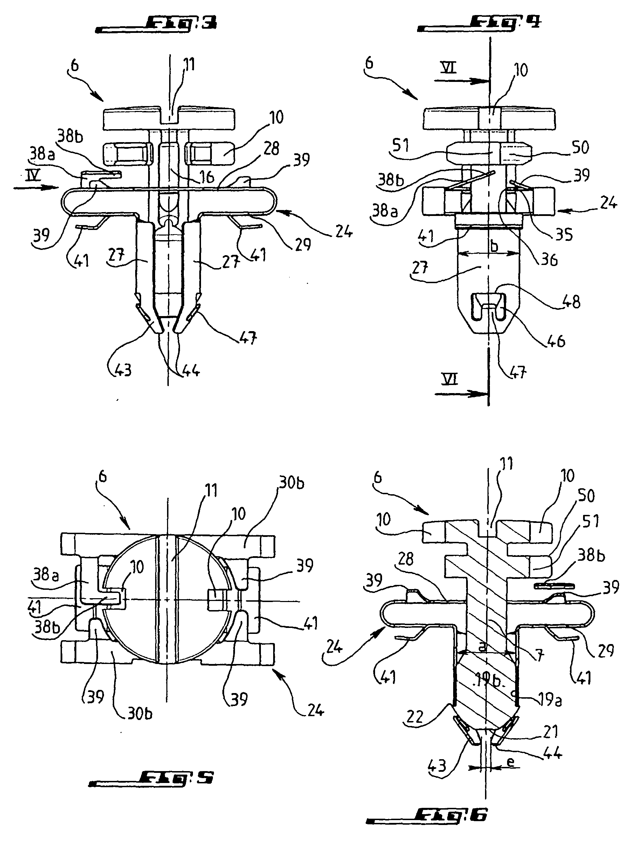

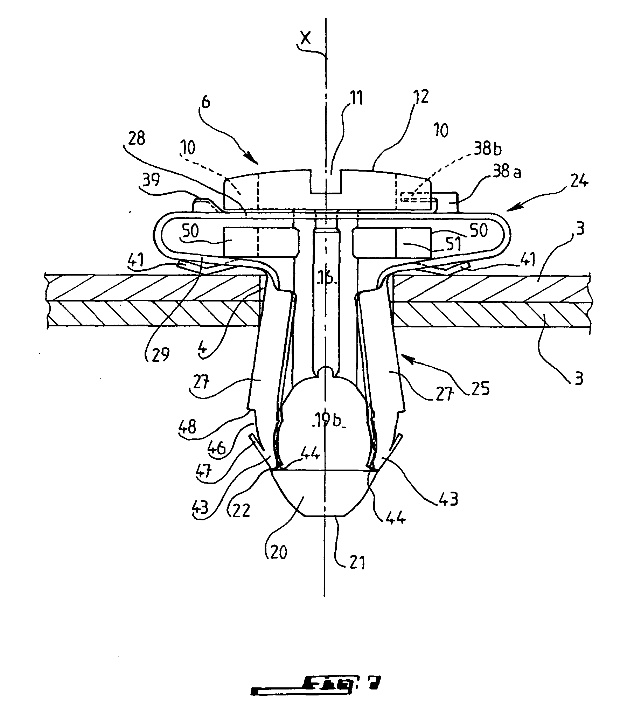

La figure 1 montre un dispositif de fixation conforme à l'invention, constitué de deux pièces coopérantes, à savoir une pièce mâle 1 et une pièce femelle 2, destinées à assurer le maintien de l'empilement de deux plaques 3 pourvues de perçages circulaires 4 de passage de l'élément femelle.

La pièce mâle avantageusement en matière plastique, comporte une partie formant tête 6 à l'extrémité supérieure d'un fût 7 dont l'autre extrémité est configurée de façon à avoir la forme d'une came 8.

Plus précisément, la tête 6 présente la forme d'un disque circulaire présentant, à sa périphérie, deux encoches radiales diamétralement opposées 10, de forme générale rectangulaire et une gorge diamétrale 11 dans la face frontale extérieure 12. La tête 6 s'étend perpendiculairement au fût 7.

La pièce mâle 1 comporte encore à une distance axiale prédéterminée de la tête 6 un élément 14 de blocage axial de la pièce, qui fait radialement saillie du fût 7 et présente une forme particulière qui sera décrite plus loin.

Le fût 7 présente entre la tête 6 et la came 8 une forme générale circulaire portant deux nervures longitudinales 16 qui font radialement saillie à l'extérieur, angulairement au niveau de la gorge diamétrale 11 et sont disposées diamétralement opposées l'une à l'autre.

La partie formant came 8 constitue un élargissement diamétral du fût 7 avec un aplatissement du fût perpendiculaire à la direction d'élargissement. La came comporte, en direction de son extrémité, une portion de transition d'élargissement et d'aplatissement progressifs 18, une portion médiane de largeur et d'épaisseur constante et une portion d'extrémité 20 qui constitue une sur-épaisseur dans les directions de la largeur et de l'épaisseur à la jonction des parties médianes et d'extrémité 19. Cette dernière va en diminuant progressivement jusqu'à l'extrémité 21 en forme d'une arête s'étendant dans la direction de la largeur de la came. A sa naissance, la partie de sur-épaisseur 20 forme avec la partie médiane 19 un épaulement périphérique 22, qui s'étend perpendiculairement vers l'extérieur à partir de la surface extérieure de la partie médiane 19.

La pièce femelle 2 est constituée par une agrafe élastiquement déformable, de préférence métallique. L'agrafe 2 présente une forme générale d'un T dont la barre horizontale constitue un chapeau 24 et la barre verticale un pied creux 25. Dans l'exemple représenté, l'agrafe est réalisée par pliage d'une pièce en forme d'une bande découpée dans un flan. Le pied est obtenu par pliage de chaque portion extérieure de la pièce en forme d'une bande autour d'une ligne perpendiculaire à la direction longitudinale de la bande. Chaque portion ainsi repliée d'un angle de 90° constitue une patte 27. Puis on forme le chapeau 24 par pliage de la partie de la bande située entre les deux pattes 27, à une distance prédéterminée de chaque patte, le long d'une ligne de pliage également perpendiculaire à la direction longitudinale de la bande, d'un angle de 180°. On obtient ainsi une paroi de chapeau horizontale extérieure 28 et des parois 29 qui sont repliées de façon à former avec la partie 28 la configuration d'un C dont les branches sont parallèles à la base. On constate sur les figures que, après ce pliage, les deux pattes 27 s'étendent parallèlement l'une à l'autre pour constituer le pied creux 25. Grâce aux parois repliées 29, le chapeau est élastiquement déformable. Comme il ressort des figures, la portion de la bande qui forme le chapeau, avec ses parois extérieures 28 et repliées 29 est évidée de façon à présenter, de façon générale, un évidement sensiblement rectangulaire 32 délimité entre des bords en forme de barrettes longitudinales 30a et 30b et transversales 31. Chaque barrette longitudinale comporte une portion 30a appartenant à la paroi de chapeau horizontale extérieure 28 et une portion 30b appartenant à la paroi repliée 29. Les barrettes 31 relient les extrémités libres des bords 30b. C'est à ces barrettes que sont reliées les pattes 27.

La tête comporte divers éléments qui font saillie dans l'évidement 32 à partir des bords 30a et 31. Ainsi la paroi supérieure 28 du chapeau comporte dans sa zone centrale deux saillies 35de forme générale rectangulaire, qui sont situées mutuellement en regard et comportent chacune une encoche 36 en forme d'un arc de cercle et de forme complémentaire à celle d'une nervure longitudinale 16 du fût 7 pour que celle-ci puisse s'engager dans cette encoche. La largeur de chaque saillie 35 correspond au diamètre du fût 7.

La paroi 28 comporte encore, sur un côté longitudinal, un élément 38 en forme d'un L dont une branche 38a s'étend perpendiculairement à partir de la barrette longitudinale 30a dans l'évidement 32 en étant incliné vers le haut hors du plan de la partie 28. L'autre branche libre 38b constitue un doigt de verrouillage qui est orienté parallèlement à la direction longitudinale de la paroi de chapeau 28 dans l'axe de symétrie, vers les saillies 35, pour qu'il puisse s'engager dans les encoches 10 à la périphérie de la tête de l'élément mâle. L'élément 38 est élastiquement déplaçable entre sa position inclinée d'engagement dans une encoche 10 et une position repoussée en direction du plan de la partie supérieure d'agrafe 28, dans laquelle elle libère l'encoche.

On constate encore la présence sur l'autre bord longitudinal 30, en face de l'élément 38 d'un ergot en saillie 39 et, à des endroits symétriques par rapport à l'élément 38 et l'ergot 39, par rapport à l'axe transversal médian Y-Y de deux autres ergots 39.

Le chapeau comporte encore en saillie à partir de chaque barrette transversale 31, une languette d'appui 41, qui présente un profil en forme d'un V très ouvert dont la base se trouve hors du plan des barrettes recourbées 30b, du côté extérieur du chapeau. C'est par ces languettes que le chapeau prend appui sur la plaque supérieure 3 dans sa position de fixation de l'empilement.

Concernant la configuration du pied 25 de l'agrafe 2, les deux pattes 27 qui le constituent sont chacune courbée de façon à présenter un profil en forme d'un arc de cercle concentrique à l'axe X-X du dispositif de fixation. Pour permettre la courbure des pattes 27, celles-ci sont reliées aux bords extérieur des barrettes transversales 31 sur seulement une partie intermédiaire 42 de leur largeur. Les pattes 27 sont configurées au niveau de leur zone d'extrémité libre 43 de façon à être radialement convergentes. Elles présentent dans cette partie le profil d'une surface partielle tronconique. Ainsi les bouts libres 44 des deux extrémités tronconiques 43 présentent un écart l'un de l'autre qui est inférieur à l'écart a entre les deux bords longitudinaux libres adjacents des deux pattes 27.

L'écart a des pattes au niveau des fonds de leurs courbures 27, l'une de l'autre, est légèrement supérieure à la largeur b de la came 8 pour permettre un déplacement axial de la came dans le creux délimité par les pattes sans provoquer l'écartement de ces dernières. L'écartement ne se produit que lorsque la came s'engage entre les bouts 44 des pattes. On notera aussi que l'épaisseur c de la came est inférieure à l'écart d des bords longitudinaux extérieurs des pattes et aussi avantageusement à l'écart e entre les bouts 44 au niveau des bords longitudinaux extérieurs.

On constate encore que dans chaque patte 27 du pied 25 est découpée une lumière 46 en forme d'une fente en U dont la base se trouve au niveau de la naissance de la zone de convergence radiale 43 et dont les branches s'étendent en direction de l'extrémité libre des pattes.

La partie 47 de la partie convergente 43 qui délimite le bord intérieur de la lumière 46 présente la forme d'une languette rectangulaire. Le bord supérieur 48 de la base du U est disposé de façon à obtenir un préassemblage des parties mâle et femelle 1 et 2 quand la partie mâle est axialement introduite dans la partie femelle, l'épaulement 22 de la came venant alors en prise derrière le bord 48 des lumières 46.

Après avoir décrit la structure des pièces mâle et femelle, on décrira ci-après la forme de l'élément de tête 14. Cet élément 14, comme le montre la figure 7, est destiné à se placer, lorsque la pièce mâle 1 est introduite axialement dans la pièce femelle jusqu'à sa position d'introduction axiale finale, entre la paroi extérieure 28 du chapeau et les parois recourbées 29. L'élément 14 est configuré de façon à permettre l'introduction de la pièce mâle 1 dans son orientation représentée sur la figure 6, jusqu'à dans la position axiale finale sans être gêné par le doigt de verrouillage 38, mais assure le blocage de la pièce mâle après une rotation dans la position de non écartement des pattes, notamment d'un angle de 90° par rapport à la figure 6, mais aussi déjà avant l'atteinte de cette position.

Pour que l'élément de tête supplémentaire 14 puisse exécuter les fonctions qui viennent d'être énoncées, il comporte deux excroissances latérales 50 qui sont diamétralement opposées et disposées de façon que, lorsque l'élément mâle occupe sa position enfoncée de non écartement des pattes 27, ces éléments viennent en prise sous les barrettes longitudinales 30a du chapeau 24. L'élément 14, présente encore des évidements périphériques 51 qui permettent son passage lors de l'enfoncement de la pièce mâle dans la pièce femelle sans être gêné par le doigt de verrouillage 38b, dans la position angulaire relative des deux pièces, illustrées sur la figure 6.

Le dispositif de fixation selon l'invention est utilisé et fonctionne de la manière suivante.

Pour l'assemblage, la fixation et le maintien par exemple des deux panneaux 3 selon la figure 1, on peut, dans un premier temps, pousser l'agrafe 2 à travers les trous 4 traversant ces panneaux et ensuite enfoncer l'élément mâle 1 dans l'élément femelle pour que, dans la position angulaire relative représentée sur la figure 1, l'élément de tête 14 puisse passer devant le doigt de verrouillage 38 grâce aux découpes 51 correspondante pratiquées à sa périphérie. Lorsque l'élément mâle est enfoncé à fond, sa partie de came 8 en glissant tout d'abord dans le creux des pattes 27 ne provoque aucun écartement de ces dernières. Ce n'est que lorsque la came, par ses faces petites latérales 19a, vient en contact avec la partie radialement convergente 43 à l'extrémité des pattes et finalement avec les bords inférieurs 44 de celles-ci, les pattes sont obligées de s'écarter et assurent ainsi le maintien des panneaux 3, comme on le voit clairement sur la figure 7. Dans cette position d'enfoncement final, les bords inférieurs 44 des pattes 27 viennent en prise sur l'épaulement 22 de la came 8 en assurant ainsi un verrouillage axial de la pièce mâle 1 dans la pièce femelle 2 dans sa position d'écartement des pattes. Etant donné que dans cette position d'enfoncement axial maximal de la pièce mâle 1 et d'écartement des pattes 27 de la pièce femelle 2, le doigt de blocage 38 du chapeau 24 de la pièce femelle est engagé dans une encoche périphérique 10 de la tête 6 de la pièce mâle, cette dernière est bloquée dans cette position angulaire relative. Tout mouvement angulaire de la pièce 1, intempestive, est ainsi rendu impossible, sans une intervention volontaire ayant pour but de repousser le doigt de blocage 38 vers le bas, c'est-à-dire dans la direction axiale du dispositif, d'une distance prédéterminée, jusqu'à ce que le doigt soit désengagé de l'encoche. Après ce désengagement, la pièce mâle peut certes être amenée à tourner dans la pièce femelle mais reste quand même axialement verrouillée dans celui-ci grâce aux excroissances 50 de l'élément de tête 14 qui se trouvent maintenant en dessous des barrettes 30a du chapeau de la pièce femelle. Ainsi, il est possible d'amener la pièce mâle dans sa position de non écartement des pattes 27, dans laquelle les extrémités 44 de celles-ci sont en face des grandes faces 19b de la came. Dans cette position angulaire relative des pièces mâle et femelle, le dispositif peut être sorti des perçages 4, avec cependant la pièce mâle toujours axialement bloquée dans la pièce femelle.

Il est à noter que le processus de la mise en place du dispositif dans les perçages 4 des panneaux 3 peut aussi commencer tout d'abord par l'enfoncement de la pièce mâle 1 dans la pièce femelle 2 avant l'engagement de cette dernière dans les perçages 4, par exemple jusqu'à ce que l'épaulement 22 de la came 8 vienne en prise derrière les bords 48 des lumières 46 pratiquée dans les pattes 27. Dans cette position axiale interdisant déjà un mouvement en arrière de la pièce mâle 1, les pattes 27 ne sont pas encore écartées si bien que le dispositif ainsi pré-assemblé peut être introduit dans les perçages 4 des panneaux. La fixation des panneaux 3 l'un sur l'autre s'obtient ensuite en poussant à fond la pièce mâle dans la pièce femelle.

Bien entendu, de diverses modifications peuvent être apportées au dispositif de fixation tel qu'il vient d'être décrit en se référant aux figures. Ainsi l'élément femelle, au lieu d'être réalisé par pliage à partir d'une bande découpée dans un flan, peut être réalisé de toute autre manière appropriée. La forme de la came 8 de l'élément mâle peut être différente, comme pourrait l'être aussi par exemple la forme du doigt de verrouillage 38. Dans ce cas, il faut bien entendu prendre soin que les éléments coopérants prévus sur l'autre pièce présentent une forme ou configuration complémentaire pour que les fonctions qui viennent d'être décrites soient toujours assurées.

## Revendications

1. Dispositif de fixation, notamment de maintien d'un empilement d'au moins deux panneaux, du type comprenant une pièce femelle en forme d'une agrafe constituée d'une tête élastiquement déformable dans la direction axiale et d'un pied creux susceptible de s'engager dans les perçages traversant ledit empilement de panneau et comportant deux pattes susceptibles de s'écarter élastiquement l'une de l'autre en étant mobiles entre une position non écartée d'insertion du pied dans lesdits perçages et une position écartée de maintien d'un empilement des panneaux, et une pièce mâle comportant une partie formant tête et une partie formant fût à section transversale en forme d'une came insérable axialement dans ladite agrafe, avec engagement entre les pattes du pied de l'agrafe et rotative dans celle-ci entre une position angulaire d'un non écartement des pattes et une position angulaire d'écartement des pattes, ainsi que des moyens d'empêchement d'une rotation intempestive de la pièce mâle dans la pièce femelle dans la position d'écartement des pattes, comportant au moins un organe faisant saillie de la tête de l'élément femelle et une encoche de réception de l'organe en saillie à la périphérie de la tête de l'élément mâle dans ladite position d'écartement, **caractérisé en ce que** l'organe précité est réalisé sous forme d'un doigt (38) déplaçable par une action volontaire entre une position d'engagement dans l'encoche (10) et une position de dégagement de cette encoche, lorsque les pièces mâle (1) et femelle (2) occupent leur position angulaire relative d'écartement des pattes (27).

2. Dispositif de fixation selon la revendication 1, **caractérisé en ce que** le doigt (38b) est disposé à l'extrémité d'un élément (38a) en saillie, élastiquement déformable dans la direction axiale du dispositif.

3. Dispositif de fixation selon la revendication 2, **caractérisé en ce que** la tête (24) de la pièce femelle (2) est évidée et l'organe élastiquement déformable (38) fait saillie dans l'évidement (32) de la tête à partir des bords (30) de la tête.

4. Dispositif de fixation selon l'une des revendications 1 à 3, **caractérisé en ce que** le doigt (38b) est déplaçable par une force agissant sur le doigt, dans la direction axiale du dispositif.

5. Dispositif de fixation selon l'une des revendications 1 à 4, **caractérisé en ce que** la tête (24) de la pièce femelle (2) présente le profil d'un C dont les bords repliés (29) sont sensiblement parallèles à la paroi de base (28) et délimitent avec cette dernière un espace de réception d'un élément (14) de blocage axial de la pièce mâle (1) dans la pièce femelle (2) lorsque la pièce mâle (1) est enfoncée dans la pièce femelle (2) et se trouve dans ses positions angulairement décalées de sa position d'écartement des pattes, l'élément de blocage (14) étant solidaire de la tête (6) de la pièce mâle (1).

6. Dispositif de fixation selon la revendication 5, **caractérisé en ce que** l'élément de blocage axial (14) assure un blocage de la pièce mâle (1) dans la pièce femelle (2) dans la position enfoncée de non écartement des pattes, permettant un retrait de l'ensemble formé par les deux pièces (1, 2) des perçages (4) des panneaux (3).

7. Dispositif de fixation selon l'une des revendications 5 ou 6, **caractérisé en ce que** l'élément de blocage (14) comporte à sa périphérie des portions (50) en saillie dans la direction radiale du dispositif, qui, dans la position d'enfoncement axial de la pièce mâle (1) dans la pièce femelle (2), passent à travers l'évidement (32) de la tête (24) de la pièce femelle (2) et viennent en prise derrière des portions de délimitation de l'évidement (32) dans la tête (24) dans les positions angulairement décalées de la position d'enfoncement et d'écartement des pattes (27).

## Claims

1. Fastening device, in particular for holding a stack of at least two panels, of the type which includes a female part in the form of a fastener consisting of a head elastically deformable in the axial direction and of a hollow leg capable of engaging in the openings running through said stack of panels and having two prongs capable of moving apart elastically from one another being moveable between a non-parted position for insertion of the leg into said openings and a parted position for holding a stack of panels, and a male part including a part forming a head and a part forming a body with a transverse section in the form of a cam insertable axially in said fastener, engaging between the prongs of the leg of the fastener and rotatable within the fastener between an angular position in which the prongs are not parted and an angular position in which the prongs are parted, and also including means for preventing untimely rotation of the male part within the female part when the prongs are parted, including at least one part projecting from the head of the female component and a notch to receive the projecting part in the periphery of the head of the male element in said parted position, **characterised in that** said projecting part is made in the form of a finger (38) moveable via a deliberate movement between a position of engagement within the notch (10) and a position of disengagement from that notch, when the male (1) and female (2) parts occupy the angular position in relation to one another in which the prongs (27) are parted.

2. Fastening device according to claim 1, **characterised in that** the finger (38b) is arranged at the extremity of a projecting element (38a), elastically deformable in the axial direction of the device.

3. Fastening device according to claim 2, **characterised in that** the head (24) of the female part (2) is cut away and the elastically deformable part (38) projects from the edges (30) of the head into the cut-away part (32) of the head.

4. Fastening device according to one of claims 1 to 3, **characterised in that** the finger (38b) is capable of being displaced by a force acting on the finger, in the axial direction of the device.

5. Fastening device according to claims 1 to 4, **characterised in that** the head (24) of the female part (2) has a C-shaped profile in which the inwardly turned ends (29) are approximately parallel to the main wall (28) and with the latter delimit a space for receiving an element (14) for axial locking of the male part (1) in the female part (2) when the male part (1) is inserted in the female part (2) and is in a position angularly displaced from the position in which the prongs are parted, the locking element (14) being integral with the head (6) of the male part (1).

6. Fastening device according to claim 5, **characterised in that** the axial locking element (14) locks the male part (1) into the female part (2) in the position of insertion in which the prongs are not parted, allowing the assembly formed by the two parts (1,2) to be withdrawn from the openings (4) in the panels (3).

7. Fastening device according to claim 5 or claim 6, **characterised in that** the locking element (14) includes on its periphery portions (50) which project in the radial direction of the device and which, in the position of axial insertion of the male part (1) in the female part (2), pass through the cut-away part (32) of the head (24) of the female part (2) and become firmly positioned beneath the sections delimiting the cut-away part (32) in the head (24) in the positions angularly displaced from the position of insertion and of parting of the prongs (27).

## Patentansprüche

1. Befestigungsvorrichtung, insbesondere zum Halten eines Stapels von zumindest zwei Platten, umfassend ein aufnehmendes Teil in Form einer aus einem in axialer Richtung elastisch verformbaren Kopf und einem zum Eingriff in die durch den Stapel verlaufenden Bohrungen geeigneten Fuß bestehenden Klammer mit zwei Klauen, die geeignet sind, sich elastisch voneinander weg zu spreizen, wobei sie zwischen einer nicht gespreizten Position zum Einführen des Fußes in die Bohrungen und einer gespreizten Position zum Halten eines Stapels von Platten beweglich sind, und ein einsetzbares Teil mit einem einen Kopf bildenden Abschnitt und einem einen Schaft bildenden Abschnitt mit einem Querschnitt in Form eines axial in die Klammer einführbaren Nockens, der zwischen den Klauen des Fußes der Klammer in Eingriff kommt und in dieser drehbar zwischen einer Winkelposition ohne Spreizung der Klauen und einer Winkelposition mit Spreizung der Klauen drehbar ist, sowie Mittel zum Verhindern einer unbeabsichtigten Drehung des einsetzbaren Teils in dem aufnehmenden Teil in der Spreizposition der Klauen, die zumindest eine vom Kopf des aufnehmenden Teils vorstehende Einrichtung sowie eine Kerbung zur Aufnahme der vorstehenden Einrichtung am Umfang des Kopfs des einsetzbaren Teils in der Spreizposition umfassen,
**dadurch gekennzeichnet,**
**dass** die vorgenannte Einrichtung in Form eines Fingers (38) ausgeführt ist, der durch eine beabsichtigte Aktion zwischen einer Eingriffposition in der Ausnehmung (10) und einer Löseposition aus dieser Ausnehmung verschiebbar ist, wenn das einsetzbare Teil (1) und das aufnehmende Teil (2) ihre relative Winkelposition zum Spreizen der Klauen (27) einnehmen.

2. Befestigungsvorrichtung nach Anspruch 1, **dadurch gekennzeichnet, dass** der Finger (38b) am Ende eines vorstehenden, in axialer Richtung der Vorrichtung elastisch verformbaren Elements (38a) angeordnet ist.

3. Befestigungsvorrichtung nach Anspruch 2, **dadurch gekennzeichnet, dass** der Kopf (24) des aufnehmenden Teils (2) mit einer Ausnehmung versehen ist und die elastisch verformbare Einrichtung (38) in der Ausnehmung (32) des Kopfs ausgehend von den Rändern (30) des Kopfs vorsteht.

4. Befestigungsvorrichtung nach einem der Ansprüche 1 bis 3, **dadurch gekennzeichnet, dass** der Finger (38b) mittels einer auf den Finger wirkenden Kraft in axialer Richtung der Vorrichtung verschiebbar ist.

5. Befestigungsvorrichtung nach einem der Ansprüche 1 bis 4, **dadurch gekennzeichnet, dass** der Kopf (24) des aufnehmenden Teils (2) ein C-förmiges Profil aufweist, dessen umgebogene Ränder (29) im Wesentlichen parallel zum Grundsteg (28) sind und mit Letzterem einen Aufnahmebereich für ein axiales Sperrelement (14) des einsetzbaren Teils (1) im aufnehmenden Teil (2) abgrenzen, wenn das einsetzbare Teil (1) im aufnehmenden Teil (2) versenkt ist und sich in seinen Winkelpositionen befindet, die von seiner Position zur Spreizung der Klauen versetzt sind, wobei das Sperrelement (14) einstückig mit dem Kopf (6) des einsetzbaren Teils (1) ausgeführt ist.

6. Befestigungsvorrichtung nach Anspruch 5, **dadurch gekennzeichnet, dass** das axiale Sperrelement (14) eine Sperrung des einsetzbaren Teils (1) im aufnehmenden Teil (2) in der versenkten Position ohne Spreizung der Klauen gewährleistet, was ein Zurückziehen der aus den beiden Teilen (1, 2) gebildeten Einheit aus den Bohrungen (4) der Platten (3) erlaubt.

7. Befestigungsvorrichtung nach einem der Ansprüche 5 oder 6, **dadurch gekennzeichnet, dass** das Sperrelement (14) an seinem Umfang in radialer Richtung der Vorrichtung vorstehende Abschnitte (5) umfasst, die in der axialen Versenkposition des einsetzbaren Teils (1) im aufnehmenden Teil (2) durch die Ausnehmung (32) des Kopfs (24) des aufnehmenden Teils (2) gleiten können und hinter Abschnitten zur Abgrenzung der Ausnehmung (32) im Kopf (24) in den Positionen festgehalten werden, die von der Versenkposition und der Spreizposition der Klauen (27) im Winkel versetzt sind.
